# EUROPEAN PATENT SPECIFICATION

(11) **EP 2 624 782 B1**
(45) Date of publication and mention of the grant of the patent: **13.03.2019**
(21) Application number: 11830244.7
(22) Date of filing: 06.10.2011
(51) Int. Cl.: A61C 13/00, A61C 13/271, A61C 13/277

(54) **DESIGNING A DOUBLE CROWN COMPRISING AN INTERNAL CROWN AND AN EXTERNAL CROWN**
ENTWURF EINER DOPPELTEN KRONE MIT EINER INNEREN KRONE UND EINER ÄUSSEREN KRONE
CONCEPTION D'UNE COURONNE DOUBLE COMPRENANT UNE COURONNE INTERNE ET UNE COURONNE EXTERNE

(30) Priority: 06.10.2010 US 390269 P; 06.10.2010 DK 201000909; 23.09.2011 DK 201100728
(43) Date of publication of application: 14.08.2013
(73) Proprietor: 3Shape A/S, 1060 Copenhagen K (DK)
(72) Inventor: FISKER, Rune, DK-2830 Virum (DK); CLAUSEN, Tais, S-21851 Klagshamn (SE)
(74) Representative: Guardian IP Consulting I/S
(86) International application number: PCT/DK2011/050379
(87) International publication number: WO 2012/045314

(56) References cited:
- EP-A1- 2 184 030
- WO-A1-2004/041112
- WO-A1-2010/074890
- WO-A2-2009/092613
- DE-A1- 10 048 119
- US-A1- 2008 193 901
- US-A1- 2009 053 677
- US-A1- 2009 087 817
- US-A1- 2009 142 733
- US-A1- 2010 106 276

## Description

### Field of the invention

This invention generally relates to a method and system for designing at least one double crown comprising an internal crown and an external crown, where the internal crown is defined as a primary part and the external crown is defined as a secondary part, where the at least one double crown may be used in a partial removable denture for a patient.

### Background of the invention

At present, the internal crown in a telescopic crown pair or double crown can be designed in a CAD program. This may be performed by taking an impression of a patient's set of teeth, scanning the impression using a laser light scanner, and forming a virtual 3D model of the set of teeth based on the scan. The internal crown can then be designed using CAD based on the virtual 3D model of the set of teeth. The internal crown can be designed by defining the insertion direction, defining the margin line, defining the cement gab or space between the internal crown and the preparation, defining the angle of the sides of the internal crown, which can typically be between 0 degrees and 9 degrees from a vertical line, defining the height between the lower and the upper spline, designing a lingual band on the lingual surface of the primary part etc.. The internal crown designed by means of CAD, can be manufactured by means of CAM.

US4411626A discloses an apparatus and process for use in preparing a crown portion to be affixed on a tooth stump is described. A model of the tooth stump is clamped to remain immobile and scanned with a scanning head attached to a numerically controlled processing machine. Data from the scanning head indicative of the contour of the tooth stump is stored in a computer memory. From this data a contour for a casting model used to make a crown portion is calculated and stored in the computer memory. Moulding material, such as wax, is placed on the tooth stump and a contour tool attached to the numerically controlled processing machine processes the moulding material to produce the casting model using the calculated data. The casting model may then be used to produce a crown portion which may be further finished with a contour tool coupled to the numerically controlled processing machine using the calculated data from the computer memory. The documents furthermore discloses that if, for the preparation of the primary element of a telescopic crown, the primary element has been cast in accordance with the shape of the casting model, the outer surface of the primary element must be still super-finished or smoothed to eliminate casting defects.

US2006106484A discloses a method for automatically creating a dental superstructure for joining to an implant based on a digital model description of the shape. To this end the actual clinical situation or an arranged clinical situation of the implant is recorded in the form of digital data; this situation is analysed; the implant axis is determined; the optimal shape of the superstructure is calculated while taking a set of structural rules into account, and; a production machine is used for producing the individual parts from at least one blank based on the digital data. The document furthermore discloses that if one or more implants are to be equipped with telescopes or conical crowns, there are in principle two different ways of doing so. The implant, or a plurality of implants, is equipped with a normal abutment, and a telescope crown frame is attached to this abutment, onto which the prosthesis can be pushed. Alternatively, the abutment itself can be designed as a conical crown. In this case the abutment does not form the usual crown post, but a telescope crown. In this case its shape can be described by a different set of parameters. For example, a line might here again describe the outline shape, whilst additionally the height of the cone and the angle of taper will define the shape within the outline. Implants exhibit axes, which may be skewed to each other. The conical crowns however, exhibit insertion axes that are parallel to each other. Implants are anchored in jawbone and extend to gingiva. The separation into abutment and crown or any other type of subdivision is then computed automatically.

It is a problem of prior art that when making telescopic crowns or double crowns it is very difficult to obtain a good the fit because precision and accuracy are hard to control in manual work. Furthermore when the crowns are made by wax casting, and mixing different substances for the materials etc., the size, expansion etc. of the different parts are very difficult to control and predict.

WO 2010/074890 A1 discloses a method of making a dental restoration. The dental restoration comprises a frame and a veneer. An inner veneer surface and an outer frame surface are adapted to be mated with one another to form the dental restoration. The method in particular comprises steps of (a) providing an outer veneer surface; (b) determining an outer frame surface, based on the outer veneer surface; (c) determining an inner veneer surface, based on the outer frame surface; and (d) providing an inner frame surface, based on a natural tooth surface.

EP 2 184 030 A1 discloses a method of producing a dental restoration, the method comprising the steps of providing a metallic frame having an inner and an outer surface, applying one or more opaque layer or composition on the outer surface of the metallic frame, providing a facing precursor having a volume A, mating the facing precursor on the outer surface of the metallic frame coated with the opaque layer using a mating composition to obtain a dental restoration intermediate, firing the dental restoration intermediate to a temperature where the facing precursor sinters to obtain a sintered facing having the volume B, and optionally applying a stain and/or glacing layer on the outer surface of the sintered facing.

### Summary

The present invention is set out in the appended claims.

Disclosed is a method for designing at least one telescopic double crown for a patient, comprising an internal crown and an external crown, where the internal crown is defined as a primary part and the external crown is defined as a secondary removable part, wherein the method comprises the steps of:
- providing a 3D scan of the patient's teeth;
- virtually designing the primary part;
- virtually designing the secondary part; and
- automatically generating the external surface of the primary part and the internal surface of the secondary part to have matching shapes,
where at least a region of the external surface of the primary part and the corresponding region of the internal surface of the secondary part are substantially straight having the same well-defined angle.

Consequently, it is an advantage that when providing a full digital design of telescopic double crowns, i.e. virtually designing both the primary and secondary part, for partial removable dentures, and thus also providing a full digital manufacturing if desired, the fit of the dental prosthesis will be very good and the time used for designing and producing the dental prosthesis will be reduced. Furthermore materials are saved because there may be no casting, and thus a perfect custom fit prosthesis is obtained faster and cheaper than what is possible according to prior art.

By the term 'substantially straight' it should be understood that the respective surface in that region do not have any irregularities, but that the surface is smooth and even. The surfaces may in this region be planar, however the surface may also follow a curvature e.g. in the shape of a partial conical or cylindrical surface depending on whether the angle between the telescope direction and the surface is zero, where the surface typically will form a cylindrical shape, or above zero, where the surface will form a conical shape.

The current description relates to telescopic double crowns. In general telescopic double crowns are dental crowns which are formed of a primary part and a secondary part. The primary part forms a matching fit with a corresponding prepared tooth. The secondary part is typically formed with an anatomic outer surface. A releasable coupling arrangement is provided between the primary and secondary part by a frictional fit provided by two opposed straight surfaces. The strength of the frictional coupling can be controlled by altering the telescopic angle between the telescopic direction, i.e. the direction in which the secondary part is placed onto the primary part, and the straight surfaces. Typically this angle is between 0° and 9°. However, other angles could of course be chosen if so desired. An angle of 0° provides a coupling which requires a higher force to separate than an angle which is e.g. 6°. Higher angles are often chosen because they provide telescopic crowns that are easy to couple together since the tapering of the surfaces provide a funnel-like configuration that aids in guiding the primary and secondary part together.

The use of such telescopic double crowns is advantageously used together with dental devices which needs to be removed regularly or occasionally by the patient or other persons without need of complicated or surgical procedures.

Dental devices that commonly use telescopic double crowns can for example be partial removable dentures. The user regularly needs to remove these dentures from the oral cavity in order to clean or otherwise maintain the unit.

The partial removable denture is typically attached to the secondary part. In one embodiment the framework of the partial removable denture may be produced as one layer together with the secondary part as will become apparent herein thereby providing an integrated unit. The secondary part(s) may then be coupled to respective primary part(s) attached to respective tooth/teeth within the oral cavity.

Optionally, other attachment devices such as clamps and other friction elements may of course also be designed and provided on the partial removable denture in order to provide additional attachment means and security.

If nothing else is specified then when a reference is made to an angle in the current description this should be read as the telescopic angle as defined and discussed above.

Telescopic double crowns come in different types. The classical type of telescopic double crown is formed of a primary part which is attached to the prepared tooth and where the secondary part covers the primary part. Other types of telescopic double crowns can be provided where a part of the primary part is anatomical and another part has a straight surface which fit with a secondary part. Such parts may be referred to as attachment crowns.

In the following any reference to telescopic double crowns or simply double crowns should be understood as being a crown comprising at least a primary and secondary part which can be coupled together and that can be uncoupled or released from each other without destroying any of the part. The primary part and the secondary part may also be referred to as the primary and secondary crown, or the internal part and external part, within the following description. Thus, by referring to a secondary removable part it should be understood that the secondary part is removable from the primary part. The force required to remove the secondary part from the primary part may be determined as discussed. Moreover, it should be understood that by removable it is meant that the primary part and the secondary part may be separated without breaking or otherwise destroying the telescopic double crowns or any elements that it may be connected to.

Typically the manufacturing of a telescopic crown and denture as discussed herein is done by a dental technician. In the following description the term 'technician' may be used to refer thereto, or when the technician is working with virtually modelling the term 'designer' is also used.

In order to provide a suitable coupling between the primary and secondary part the substantially straight region should preferably be at least 2 millimetres in diameter.

Moreover, the well-defined angle refers to the telescopic angle as previously discussed. By designing both the primary part and the secondary part virtually it is possible to very closely and precisely form the primary and secondary part with the same angle.

Thus the primary part and the secondary part are designed to fit each other, to have corresponding shapes, to match each other etc.

The internal surface of the secondary part is the surface which is arranged to adjoin the external surface of the primary part.

The primary part is adapted to be attached or be cemented onto an existing prepared tooth.

There may be two or more double crowns in a patient's mouth and thus in a partial removable denture.

Typically, the prepared tooth which the primary part is attached to is in an anatomical right position, i.e. in a position where there is normally a tooth, and then the secondary part is designed exactly on the primary part. However if this is not the case, then the secondary part is designed to be displaced relative to the primary part.

The primary and the secondary parts may attach to each other by means of friction, adhesion due to the water in saliva etc.

The different parts, e.g. the primary part, the secondary part and the framework for the partial removable may be manufactured in different materials using different manufacturing methods and equipment.

All parts may be manufactured by means of computer-aided manufacturing (CAM). Furthermore, all parts may be designed by means of computer-aided-designing (CAD).

The 3D scan of the patient's teeth or oral situation may be a scan of an impression of the teeth, it may be a scan of a model of the teeth created from an impression of the teeth, it may a direct scan of the teeth made by means of intra oral scanning etc.

Double crowns may also be denoted telescopic crowns. Double crowns or telescopic crowns are typically produced from non-precious alloys. Both the primary part and the secondary part may be crowns.

In some embodiments at least half of the area of the external surface of the primary part and the internal surface of the secondary part are substantially straight having the same well-defined angle.

In some embodiments the entire external surface of the primary part and the entire internal surface of the secondary part are substantially straight having the same well-defined angle.

The angle may be e.g. 0 degrees, 2 degrees, 4 degrees, 6 degrees etc.

In many commonly used manufacturing processes the parts are post-processed after being printed or milled. Such post-processing steps can for example be veneering with porcelain, polishing or other surface treatments. This may result in that the external surface of the produced primary part may deviate slightly with the external surface of the virtually designed primary part. Other deviations due to e.g. printing or milling tolerances may also influence the external surface of the primary part. As a result the fit with the secondary part may not be optimal.

Thus, according to the invention, in order to obtain improved fit the method further comprises the steps of:
- producing/manufacturing the primary part;
- providing a 3D scan of the external surface of the produced primary part,
- using the external surface of the produced primary part to generate matching shapes of the external surface of the primary part and the internal surface of the secondary part.

This provides a flow which still allows both the primary and secondary part to be virtually designed even though the production setup may not be able to manufacture the exact models due to manufacturing tolerances, post-process treatment etc.

In some embodiments the primary part has a 0 degree angle.

In some embodiments the primary part is a tapered crown.

Thus this is a crown which may have more than 0 degree angle, e.g. 2-4 degrees, or up to 6 degrees, or up to 9 degrees etc.

In some embodiments the at least one double crown is for use in a partial removable denture.

Manual processes so far require that the primary part is designed first in order to ensure a fit to the prepared tooth. Subsequently, based on the primary part the secondary part is designed. This manual workflow has been transferred identically into known digital workflows for designing double crowns.

However, it has shown that in some situations it would be an advantage to be able to design the secondary part first. By designing the secondary part first it is possible to design and visualise the anatomy first and thus the final design of the telescopic double crown will be based on the anatomy instead of the prepared tooth on which the primary part is mounted. This provides a better fit of the telescopic double crown. Thus, in one embodiment the secondary part may be designed first and based on this the primary part is designed.

In order to prevent that the primary and secondary part are designed beyond the desired shape, such as the anatomy shape, a confinement shell may be defined which prevents the designer to extend the design beyond the borders of the shell. Alternatively the system may issue a warning if the boundary of the confinement shell is breached. Thus, in one embodiment the outer surface of the secondary part is designed first and used as a confinement shell within which the primary part is designed. In one embodiment the outer surface can be the anatomy of the secondary part.

The confinement shell may be defined for only a part of the shape or anatomy of the telescopic double crown. E.g. if it is set up for the sides of the double crown, e.g. defining any one of the buccal, distal, mesial, proximal, lingual or labial surfaces, the arrangement and spacing between neighbouring teeth can be kept in a fixed relation within the confinement shell.

In another embodiment the confinement shell is defined for the occlusal surface of the double crown, e.g. the surface of the double crown which will be facing away from the primary part. By providing a confinement shell in this part it is possible to maintain the design of the occlusal surface which define the masticating or chewing properties of the double crown.

In one embodiment the confinement shell can be defined as representing the entire outer surface or anatomy allowing for full designing freedom within the confinement shell without having to worry about altering any of the properties initially established by designing the anatomy or outer surface.

In other words it can be said that the confinement shell serves to fix or limit specific dimensions, such as the thickness of different areas of the telescopic double crown which thus are easy to determine as they can be measured and set in the software.

In some embodiments the primary part is designed first and based on this the secondary part is designed.

In some embodiments the method further comprises designing a framework part for the partial removable denture.

In some embodiments the secondary part and the framework part are designed as one part.

Thus the secondary part and the framework part may also be designed in the same step.

In some embodiments the primary part and the secondary part are designed as one part.

Thus the primary part and the secondary part may also be designed in the same step.

In some embodiments the primary part, the secondary part and the framework part are designed as one part.

Thus the primary part, the secondary part and the framework part may also be designed in the same step.

In some embodiments the method further comprises selecting a template from a template library for designing one or more of the different parts.

In some embodiments the external surface of the primary part or the internal surface of the secondary part is designed by providing an offset from that one of the surfaces which is designed first.

In some embodiments the method further comprises defining a space between the external surface of the primary part and the internal surface of the secondary part.

The space is provided such that the primary part and the secondary part can be assembled and separated.

In some embodiments the method further comprises automatically generating the thickness of the primary part and/or of the secondary part such that the thickness corresponds to a predetermined value.

The thickness should not be smaller than a predetermined value for avoiding that the parts break, and the thickness should also not be larger than a predetermined value for ensuring that the parts can fit into the mouth and fit together with the framework for the partial removable.

By choosing such predetermined thicknesses, e.g. a minimum thickness, the designer may design the respective part without worrying about producing a part which is too thin without the CAD software alerting him thereof or even preventing the designer to provide designs with thicknesses that are less than the minimum thickness. The predetermined thickness may vary depending on the type and characteristic of the material which the part is finally manufactured from. The CAD software may have data stored with corresponding minimum thicknesses for respective materials such that these are automatically set when the designer choses a specific material for the respective parts, or/and the designer may also have the option of choosing the thickness manually.

In some embodiments the method further comprises defining the insertion direction of the primary part and/or of the secondary part.

In some embodiments the method further comprises defining the telescope direction of the primary part and/or of the secondary part.

It is called telescope direction both for telescopic crowns and for tapered crowns.

In some embodiments the method further comprises designing the sides of the primary part to be straight and vertical to obtain a suitable insertion direction.

In some embodiments the partial removable denture comprises at least two double crowns.

The partial removable denture may typically comprise such as two, three or four double crowns.

In some embodiments the method further comprises designing the insertion directions of each of the primary parts or of each of the secondary parts to be the same.

In some embodiments the method further comprises designing the telescope directions of each of the primary parts or of each of the secondary parts to be the same.

In some embodiments the method further comprises defining different angles for the lingual surface, the labial surface, the distal surface and the mesial surface of the primary part and/or of the secondary part.

In some embodiments the angles of the lingual surface and the labial surface of the primary part or of the secondary part are the same.

In some embodiments the angles of the distal surface and the mesial surface of the primary part or of the secondary part are the same.

In some embodiments the method further comprises automatically generating the design of anchoring elements for the primary part, the secondary part and/or the framework part.

Anchoring may be by means of friction or by means of an additional friction element.

In one embodiment the region of the external surface of the primary part and the corresponding region of the internal surface of the secondary part are substantially straight having the same well-defined angle further comprises a lower region section and at least one upper region section separated by a transition section having a transition angle differing from the respective angles of the lower region part and the at least one upper region part.

By designing the telescopic double crown with two regions having different dimensions it is possible to provide telescopic crowns in areas where more space is needed. E.g. in areas where there are relative much space in the lower region this section can be formed with larger dimensions than in the upper region where space may be tight due to neighbouring teeth.

As will be understood herein the secondary part may be formed in one piece where the outer surface forms the anatomy of the telescopic crown.

However, in another embodiment the secondary part may furthermore comprise at least partly a separate anatomy layer. This may be the case where the majority of the secondary part is made from a material which is durable and suitable to be used for coupling with the primary part, or e.g. is suitable for attachment to a framework of a denture.

In many cases such material is not very esthetical, i.e. it does not resemble the material of a tooth. Thus, the separate anatomy layer may e.g. be porcelain or other material having good esthetical properties. The separate anatomy layer can for example be applied in the form of a veneering layer or a coping.

The present invention relates to different aspects including the method described above and in the following, and corresponding methods, devices, uses and/or product means, each yielding one or more of the benefits and advantages described in connection with the first mentioned aspect, and each having one or more embodiments corresponding to the embodiments described in connection with the first mentioned aspect and/or disclosed in the appended claims.

In one further aspect the invention thus relates to a double crown which has been manufactured according to the method as described above.

In another aspect the invention relates to a method for designing a partial removable denture for a patient, comprising a framework and at least two double crowns, wherein the method comprises the steps of:
- providing a 3D scan of the patient's teeth;
- virtually designing the framework;
- virtually designing the at least two telescopic double crowns.

In particular, it is an advantage in one embodiment to design the anatomy of the partial removable denture first and based on this the specific parts of the denture is subsequently designed. This allows the technician to design the denture based on the desired look and design of the final product and thus provide a product with optimal fit and function.

After designing the anatomy of the partial removable denture as one piece the denture can subsequently be split into its specific parts, such as the framework, telescopic crowns, artificial teeth, artificial gingiva etc.

Accordingly, in one aspect the invention also relates to a removable partial denture comprising a framework and at least two double crowns designed as described herein, wherein the double crowns are separated by the framework.

In particular, disclosed herein is a system for designing at least one double crown for a patient comprising an internal crown and an external crown, where the internal crown is defined as a primary part and the external crown is defined as a secondary part, wherein the system comprises:
- means for providing a 3D scan of the patient's teeth;
- means for virtually designing the primary part;
- means for virtually designing the secondary part; and
- means for automatically generating the external surface of the primary part and the internal surface of the secondary part to have matching shapes, where at least a region of the external surface of the primary part and the corresponding region of the internal surface of the secondary part are substantially straight having the same well-defined angle.

Furthermore, the invention relates to a computer program product comprising program code means for causing a data processing system to perform the method when said program code means are executed on the data processing system, and a computer program product comprising a computer-readable medium having stored there on the program code means.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows schematically a workflow as used in prior art,
Fig. 2 shows an example of a flow chart of the computer-implemented method.
Fig. 3 shows an example of a virtual 3D model with a number of primary parts for double crowns.
Fig. 4 shows an example of a virtual 3D model with teeth preparations.
Fig. 5 shows an example of a virtual tooth preparation.
Fig. 6 shows an example of a virtual tooth preparation with a marked margin line.
Fig. 7 shows an example of a virtual 3D model with teeth preparations having a cement gap applied.
Fig. 8 shows an example of a virtual 3D model where a primary part is designed on a tooth preparation.
Fig. 9 shows an example of a virtual 3D model where a primary part is designed using sculpt tools.
Fig. 10 shows an example of a virtual 3D model comprising two primary parts.
Fig. 11 shows an example where the secondary part is designed based on the primary part.
Fig. 12 shows an example where the primary part is designed from the secondary part.
Fig. 13 shows schematically a workflow according to a first embodiment of the present invention,
Figs. 14a - 14g shows production steps performed in different parts of the workflow according to the first embodiment of the present invention,
Fig. 15 shows an alternative embodiment of a workflow according to the invention wherein a scanning step is introduced.
Fig. 16 shows alternative type of telescopic crown.
Figs. 17a - 17c illustrates different embodiments of telescopic double crowns.

### Detailed description

In the following description, reference is made to the accompanying figures, which show by way of illustration how the invention may be practiced.

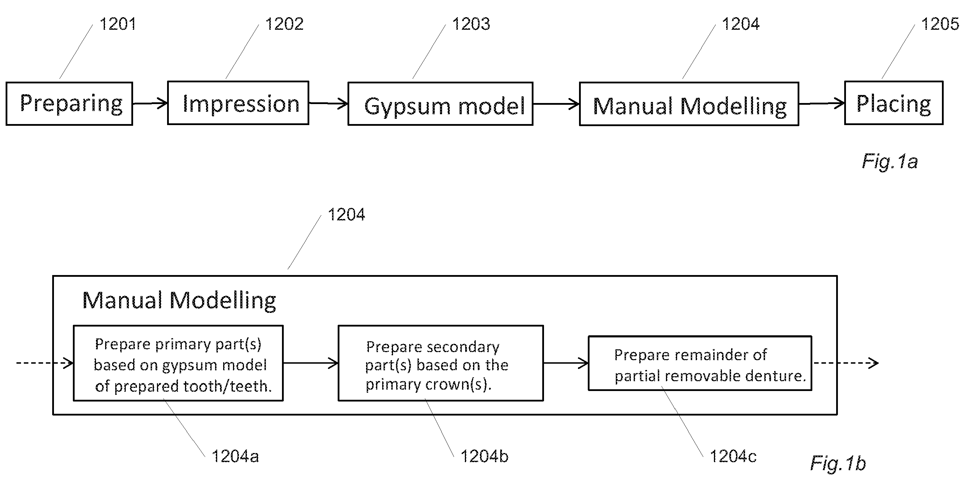

A typical workflow for manually producing telescopic double crowns, also referred to as telescopic crowns, and partial removable dentures (PRD's) is shown in figures 1a and 1b.

In general the manual process involves five steps 1201, 1202, 1203, 1204 and 1205 as shown in figure 1a.

In the preparing step 1201 the dentist prepares the teeth. This involves grinding the teeth on which telescopic crowns are to be placed.

In the impression step 1202 the dentist takes an impression of the dental situation. The dentist then ships the impression to a dental technician, e.g. at a dental lab, for further processing.

In the gypsum model step 1203 the dental technician pours a gypsum model from the impression.

In the manual modelling step 1204 a partial denture including telescopic crown are modelled in wax as will be described. The partial denture including primary parts of the telescopic crown are shipped to the dentist.

In the placing step 1205 the telescopic crowns and the partial denture is finally fitted in the patient's oral cavity.

The manual modelling step 1204 is further described in figure 1b where it is divided into three further sub-steps 1204a, 1204b and 1204c.

In the first sub-step 1204a the primary part of the telescopic crown is manufactured based on the gypsum model of the prepared tooth. Of course, if several telescopic crowns are ordered they are all manufactured in this step.

In this step it is important to establish the insertion direction and the telescope direction of the primary part.

The insertion direction is the direction in which the primary part is attached to the prepared teeth. If several telescopic crowns have been ordered the insertion direction may differ from each telescopic crown depending on how the dentist has prepared the teeth.

The telescope direction is the direction in which the secondary part is attached to the primary part. If several telescopic crowns have been ordered it is important that the telescope direction is the same for all telescopic crowns. Otherwise it will not be possible to place the partial denture correctly in the mouth of the patient.

In the second sub-step 1204b the secondary part of the telescopic crown is manufactured based on the primary part and the telescope direction. As in the first sub-step then if several telescopic crowns are ordered they are all manufactured in this step.

Besides the requirement that the secondary part has to fit the primary part and the telescope direction, the secondary part is also manufactured based on some anatomical requirements.

As a basic rule the anatomical requirements are that the secondary part must be esthetical and functional, i.e. it should look like a normal tooth and it should have good chewing properties. Of course, depending on the situation and placement of the telescopic crown some of the anatomical requirements may be more or less relevant.

With the primary and secondary part manufactured the dental technician may now manufacture the rest of the partial removable denture in sub-step 1204c. The partial removable denture is manufactured based on numerous requirements, one of them being the arrangement of the prepared teeth in the jaw and another being the anatomical shape of the secondary part.

As can be seen the workflow is very one way, and although some initial planning can be made, e.g. providing a rough plan of how the removable denture should be formed, each part of the partial removable denture is very dependent on how the pervious part is shaped.

Moreover, since each subsequent step requires a manufactured part the method allows for very little flexibility and iteration.

Today, although CAD software has been introduced in some parts of the manual modelling steps, the parts of the work flow of the manual modelling that has been transferred has been applied analogously in the virtual design room.

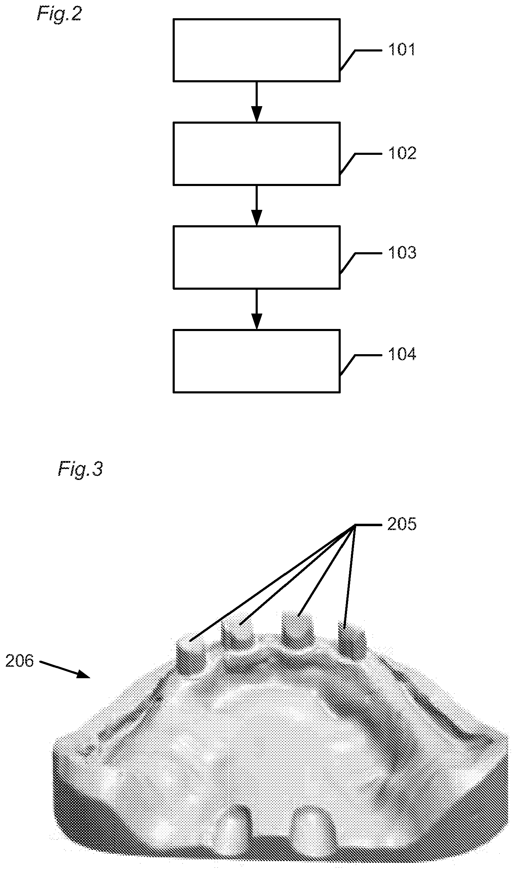

Fig. 2 shows an example of a flow chart of the computer-implemented method for designing at least one double crown comprising an internal crown and an external crown, where the internal crown is defined as a primary part and the external crown is defined as a secondary part, where the at least one double crown is for use in a partial removable denture for a patient.

In step 101 a 3D scan of the patient's teeth is provided.

In step 102 the primary part is virtually designed.

In step 103 the secondary part is virtually designed.

In step 104 the external surface of the primary part and the internal surface of the secondary part are automatically generated to have matching shapes, and at least a region of the external surface of the primary part and the corresponding region of the internal surface of the secondary part are substantially straight having the same well-defined angle.

Fig. 3 shows an example of a virtual 3D model with a number of primary parts for double crowns.

The virtual 3D model 206 of a patient's oral situation or set or teeth is shown and in this case four teeth are present which are all covered with a primary part or crown 205.

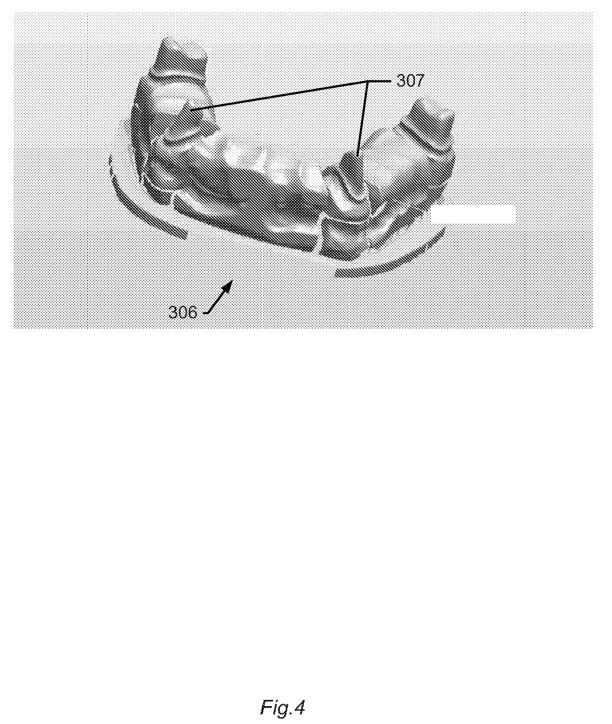

Fig. 4 shows an example of a virtual 3D model with teeth preparations.

The virtual 3D model 306 comprises two preparations 307 which are prepared for an attachment of a primary part.

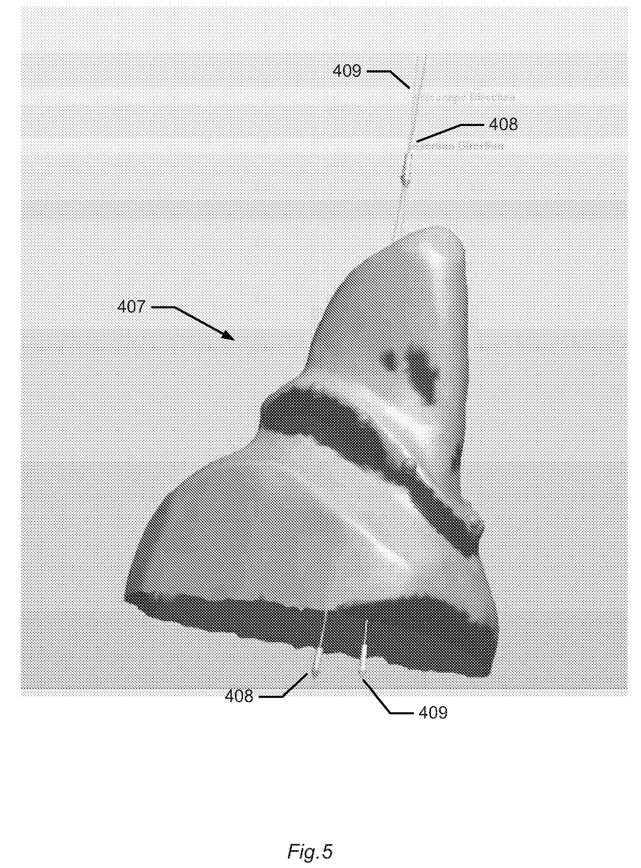

Fig. 5 shows an example of a virtual tooth preparation.

The tooth preparation 407 is one of the preparations 307 from fig. 4. The insertion direction 408 and the telescope direction 409 are automatically generated for the tooth preparation 407. It is seen that the insertion direction 408 and the telescope direction 409 are different, because the telescope direction is determined such that the partial removable can be attached and removed easily from the primary parts.

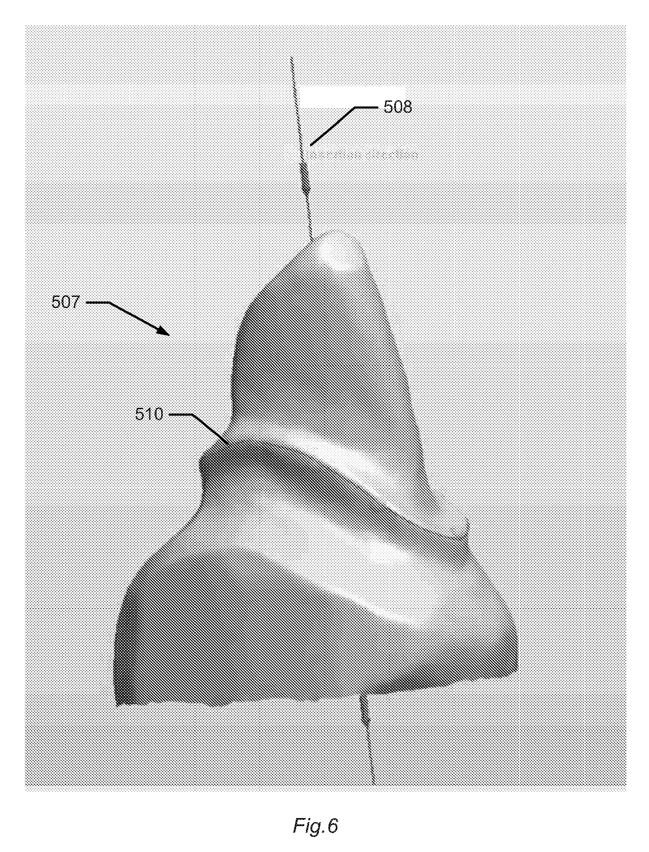

Fig. 6 shows an example of a virtual tooth preparation with a marked margin line.

The tooth preparation 507 and the insertion direction 508 from fig. 5 are shown. Furthermore, a margin line 510 is automatically generated for the tooth preparation 507.

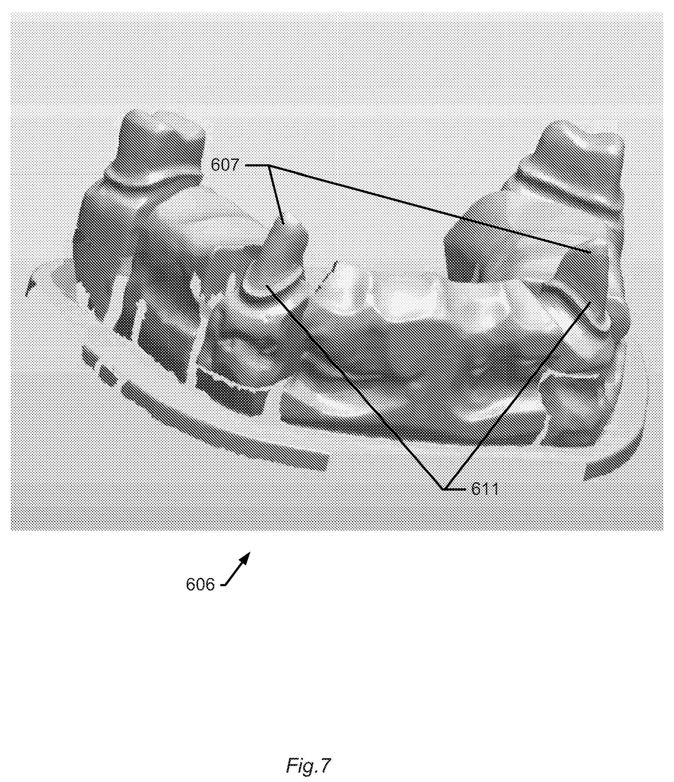

Fig. 7 shows an example of a virtual 3D model with teeth preparations having a cement gap applied.

The virtual 3D model 606 comprises the two preparations 607. The cement gap 611 or cement space has been applied to the preparations 607. The cement gap 611 is applied to the entire surface of a preparation for ensuring that there is space enough for adding glue to the real preparation such that a primary part can be attached permanently.

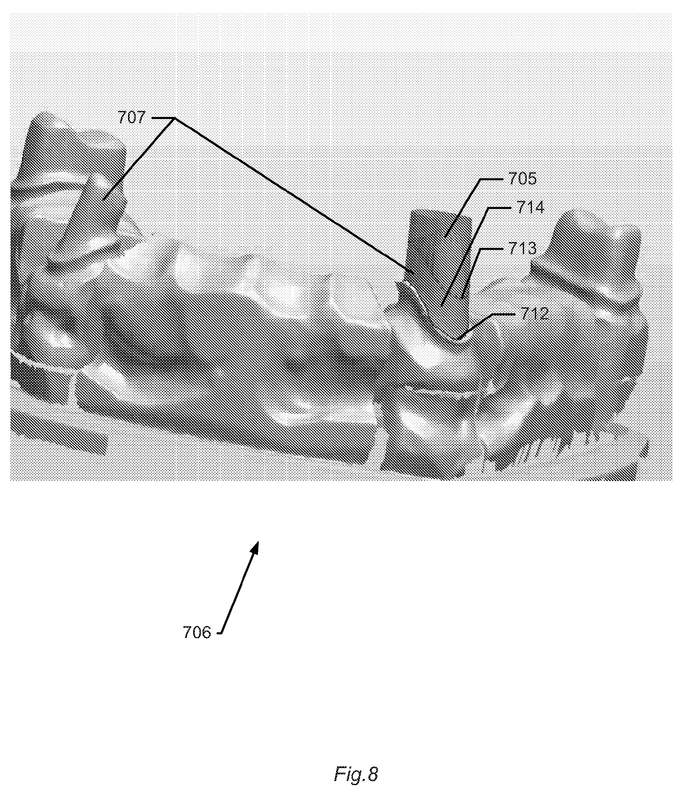

Fig. 8 shows an example of a virtual 3D model where a primary part is designed on a tooth preparation.

The virtual 3D model 706 comprises two preparations 707 on which the cement gap has been applied, see fig. 7. On one of the preparations 707 the primary part or crown 705 for a double crown or for a telescopic double crown for a partial removable is being designed. A lower spline 712 and an upper spline 713 for determining the angle surface 714 of the primary part 705 are automatically generated.

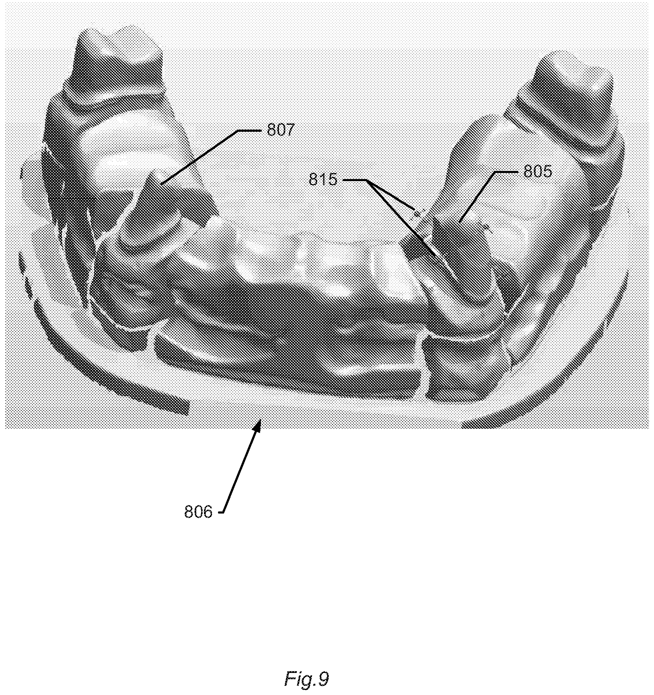

Fig. 9 shows an example of a virtual 3D model where a primary part is designed using sculpt tools.

The virtual 3D model 806 comprises a preparation 807 and a primary part 805 which is being designed using sculpt tools 815. The sculpt tool 815 can increase or reduce the size of the primary part 805 in different areas.

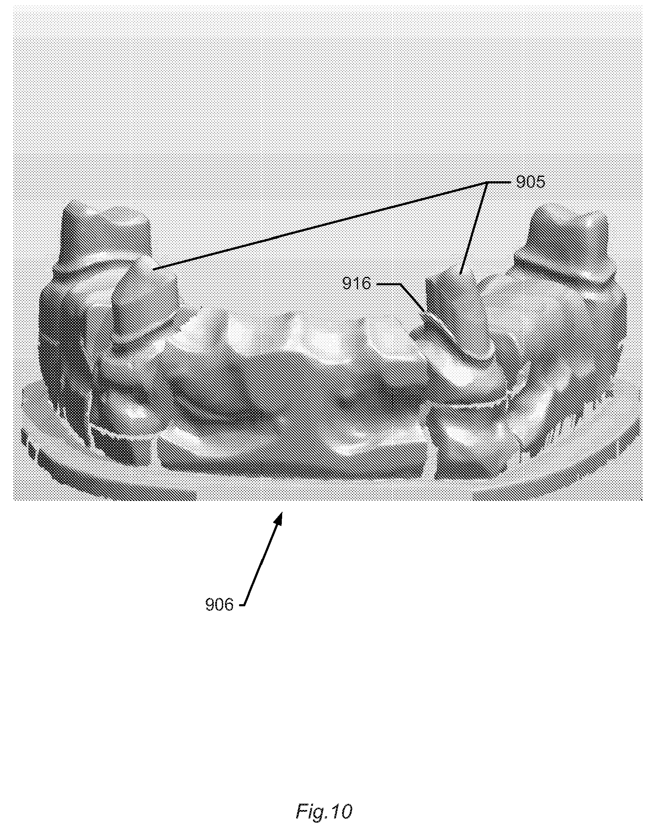

Fig. 10 shows an example of a virtual 3D model comprising two primary parts.

The virtual 3D model 906 comprises the two finished, designed primary parts 905. The lingual band 916 can be seen on one of the primary parts 905.

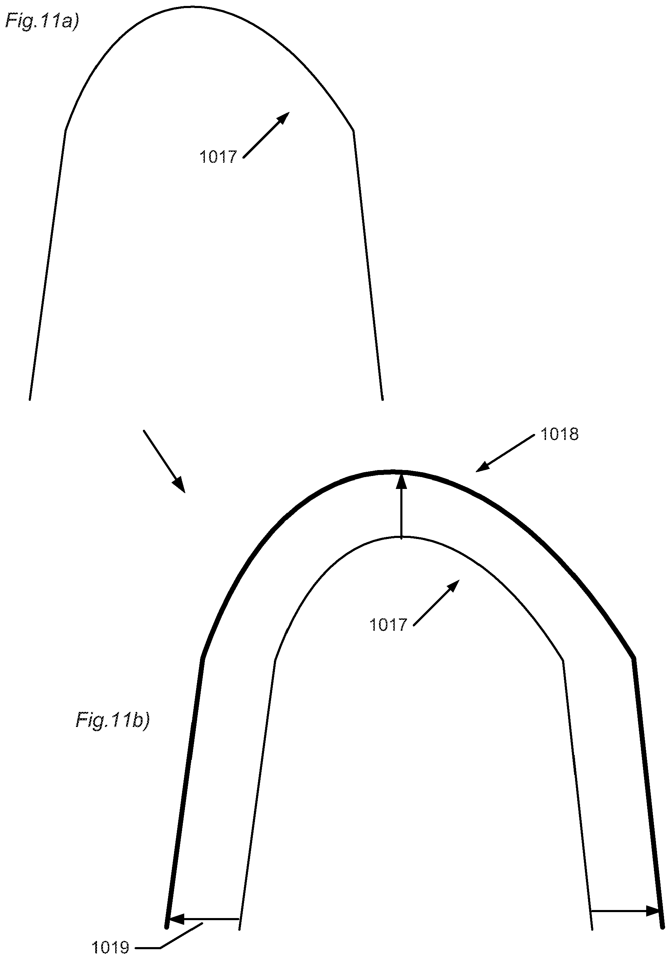

Fig. 11 shows an example where the secondary part is designed based on the primary part.

In fig. 11a) first the primary part is designed and the contour 1017 of the external surface of primary part is used to design the contour 1018 of the internal surface of the secondary part. The contour 1018 of the internal surface of the secondary part is designed by offsetting 1019 the contour 1017 of the external surface of the primary part, see fig. 11b).

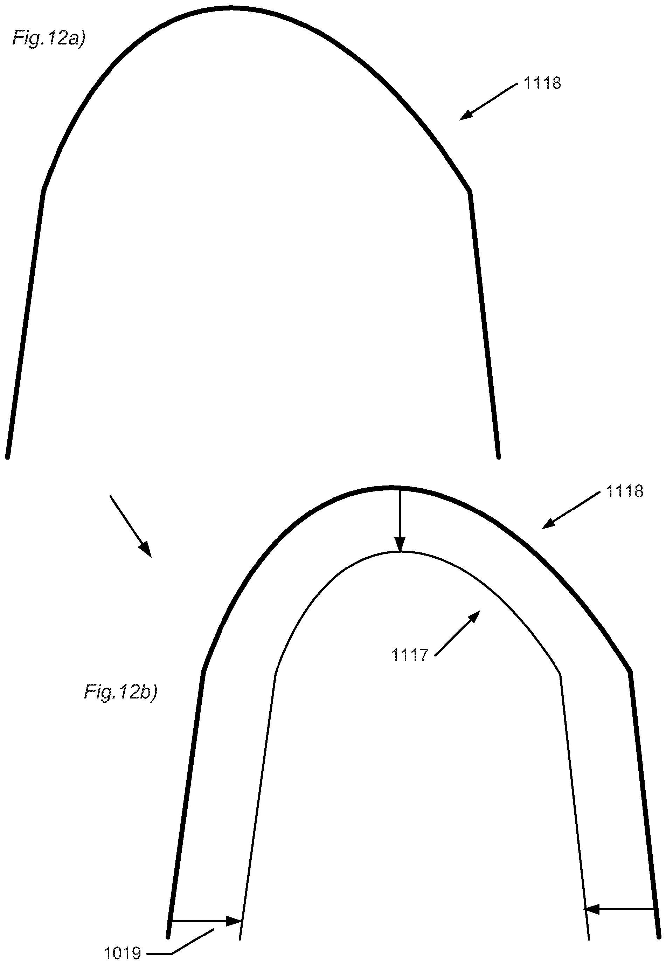

Fig. 12 shows an example where the primary part is designed from the secondary part.

In fig. 12a) first the secondary part is designed and the contour 1118 of the internal surface of the secondary part is used to design the contour 1117 of the external surface of the primary part. The contour 1117 of the external surface of the primary part is designed by offsetting 1019 the contour 1118 of the internal surface of the secondary part, see fig. 12b).

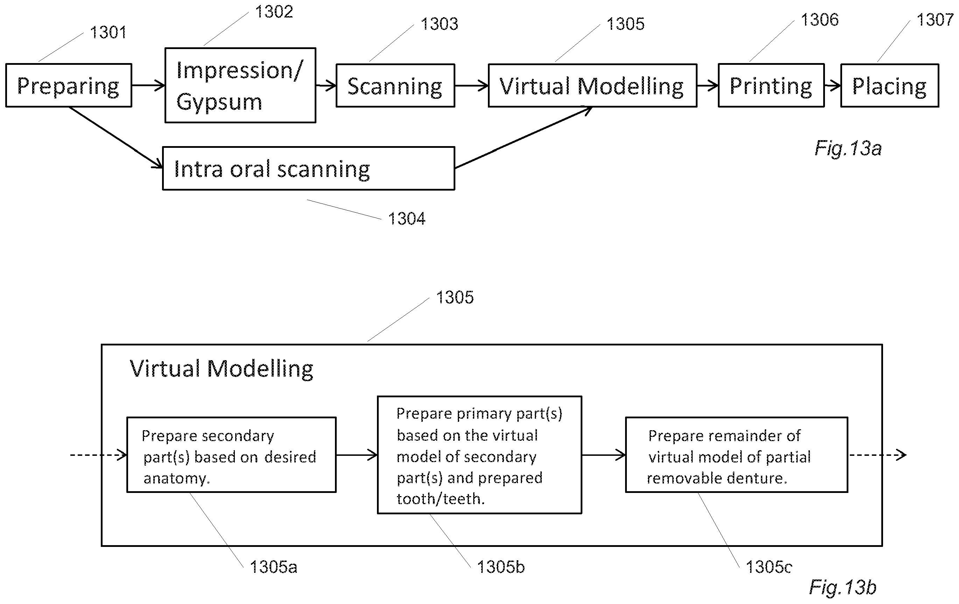

A full digital workflow is illustrated in figure 13a and is in many ways similar to the work flow described with respect to figure 2. The digital process generally comprises six steps 1301, 1302, 1303, 1305, 1306 and 1307 as illustrated. It should be noted that a full digital work flow for forming a telescopic crown have previously not been implemented in practice.

The steps of preparing and impression 1301 and 1302 are basically similar to the corresponding steps 1201 and 1202 in the manual workflow as described with respect to figures 1a and 1b.

When the dental technician receives the impression he may pour a gypsum model and scans it in the scanning step 1303 using a 3D scanner in order to obtain a 3D dental model. Alternatively, the dental technician may scan the impression directly using a 3D scanner without pouring a gypsum model.

In an alternative step 1304 the dentist can use an intra-oral 3D scanner in order to directly scan the dental set and provide a 3D model thereof. The 3D model is then electronically shipped to the dental technician, for example via the Internet.

In the virtual modelling step 1305 the technician designs a 3D model of the partial removable denture including the telescopic crowns based on the 3D dental model obtained from the 3D scanner.

When the design is complete the removable partial denture is manufactured in the printing step 1306 using CAM (Computer Aided Manufacturing) software and for example a 3D printer or 3D milling machine.

Finally the removable partial denture is shipped to the dentist who in the placing step 1307 places the partial denture in the patient's mouth.

As mentioned previously, the technician has until now performed the modelling process in the complete same order as previously done manually as shown in fig. 1 and only some parts of the process have been done virtually.

However, an alternative work flow within the virtual modelling step 1305 is shown in figure 13b where the work flow has been optimised as shown by the sub-steps 1305a, 1305b and 1305c.

In general for a partial removable denture to be useable to a patient it should be esthetical, i.e. look like real teeth, and function correctly, i.e. fit well in the mouth cavity and exhibit good chewing properties.

These properties are however mainly obtained by the secondary part, which is the part that can be seen visually by people with whom the patient interact and is also the part which is in direct contact with other teeth when chewing. As shown in figure 13b the first sub-step 1305a allows the designer to design the secondary crown first. This provides a much higher degree of freedom for the designer since he does not initially have to take limitations such as reference to the primary part and telescope direction into consideration. Instead he can design the secondary part based on its esthetical and functional features.

When the secondary part has been designed the designer may then subsequently design the primary part based on the secondary part in the second sub-step 1305b. This may for example be done by using the example described above with respect to figure 12b.

Finally, when the telescopic crowns have been completely designed the designer designs the remainder of the partial removable denture based on the telescopic crowns.

As can be understood and which have been explained above this allows the dental technician to provide improved partial removable dentures.

In some cases the dental technician may even design the partial removable denture before designing the telescopic crowns. This ensures an improved fit of the entire partial removable denture based on which the telescopic crowns can be designed.

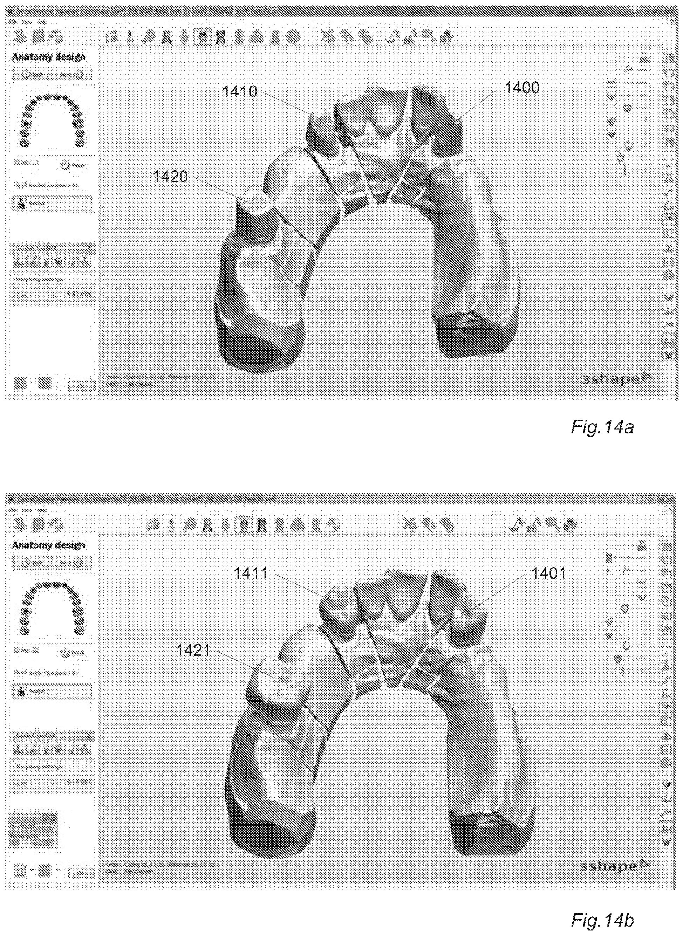

A more detailed description of the improved workflow shown in figures 13a and 13b will be described in the following with reference to a case as illustrated in figures 14a - 14i.

Figure 14a shows a 3D model of the lower arch of a patient. The scan may be obtained from a gypsum model taken from a dental impression from the patient or the scan may be obtained by scanning the impression of the patient's teeth. However, as described previously the scan could also have been taken directly from the patient using an intra-oral scanner. The right lateral incisor 1400 and the left cuspid 1410 and first left molar 1420 have been prepared by the dentist.

Based on the 3D model of the lower arch the dental technician now directly goes on to designing anatomical 3D models of the respective teeth, i.e. a right lateral incisor anatomical crown 1401, a left cuspid anatomical crown 1411 and a first left molar anatomical crown 1421 as shown in figure 14b.

The anatomical crowns of the respective teeth can in this step be designed with a primary focus on the basic and critical functions of a dental restoration, such as being esthetical correct, e.g. look like teeth, and/or to be optimised for their function, e.g. chewing.

When the anatomical designs of the crowns are complete the type of indication for each tooth can be chosen.

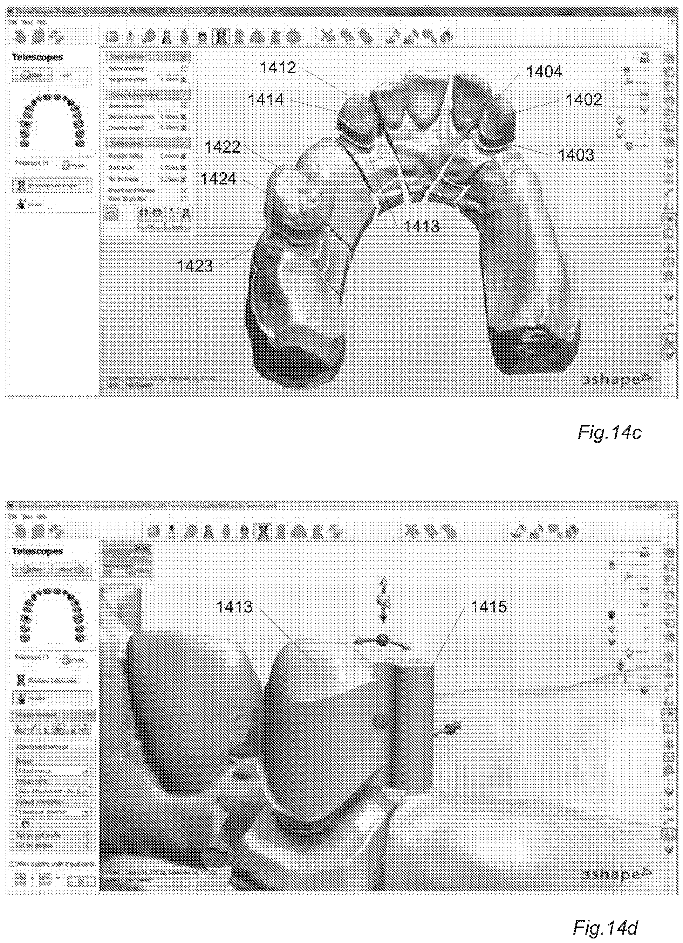

The right lateral incisor, the left cuspid and the first left molar are all chosen to be a traditional telescopic double crown 1402, 1412 and 1422 as shown in figure 14c and described herein. The CAD software then automatically splits the respective anatomical crowns 1401, 1411 and 1421 into respective primary lateral incisor part 1403, secondary lateral incisor part 1404, primary cuspid part 1413, secondary cuspid part 1414, primary molar part 1423 and secondary molar part 1424.

The telescopic crowns 1402, 1412 and 1422 are split into their respective primary and secondary parts based on some default values and requirements applied by the CAD software. Such defaults may for example be a minimum wall thickness of the secondary part and/or the tapering angle of the telescopic surface. These parameters may be manually altered by the designer. Alternatively the designer may alter the design by freehand by using a variety of sculpt tools within the design environment of the CAD software. However, when the design is complete the software will adapt the primary and secondary part of the respective telescopic crowns so that they fit with each other within the boundaries as set by the initial anatomical design.

After designing the respective primary and secondary parts of the telescopic crowns additional features are added to the designs.

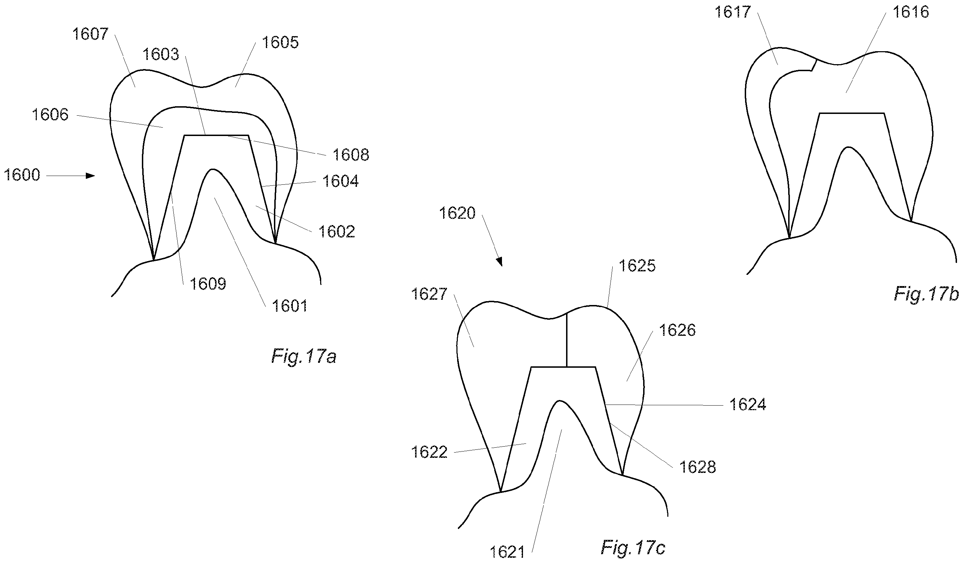

In an optionally step the designer may further split the secondary part into two pieces, where the outer part is forming a veneer layer of the secondary part. Other optionally designs may also be provided; some of them will be described further in respect to figures 17a, 17b and 17c.

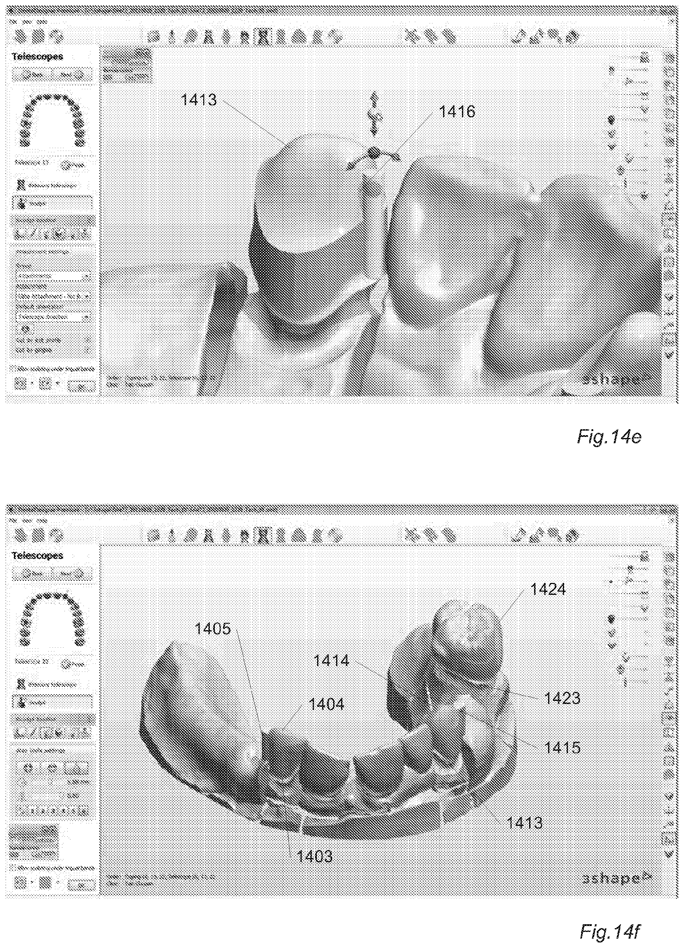

The primary cuspid part 1413 is in subsequent design steps provided with an attachment rod 1415 as shown in figure 14d and a guide groove 1416 as shown in figure 14e.

The primary lateral incisor part 1403 may also be provided with an attachment rod 1405 and a guide groove (not shown), as can be seen in figure 14f

Figure 14f also shows the respective primary and secondary parts in an overlay view.

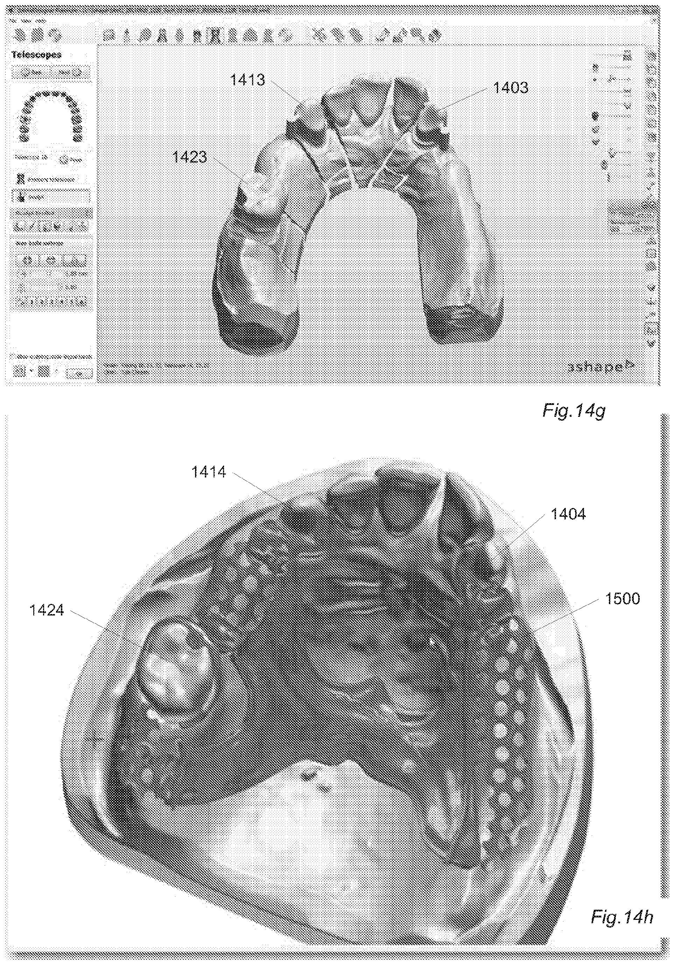

The designer now goes on to designing the remainder of the partial denture. Based on the primary parts 1403, 1413 and 1423 as shown in figure 14g he can virtually determine his reference for designing the partial denture.

As shown in figure 14h the designer can arrange the framework 1500 of the denture in respect to the anatomical shape of the lower jaw and the position of the respective secondary parts 1404, 1414 and 1424 which have been placed on their respective primary part. If desired the framework can also be modelled automatically by the computer based on default settings and by using the 3D model of the lower arch as a reference for the shape of the framework. Both general settings and a vast number of details may be altered and manipulated manually by the user if so desired.

The framework is modelled so that it engages with the attachment rods and the guide grooves provided on the different crowns.

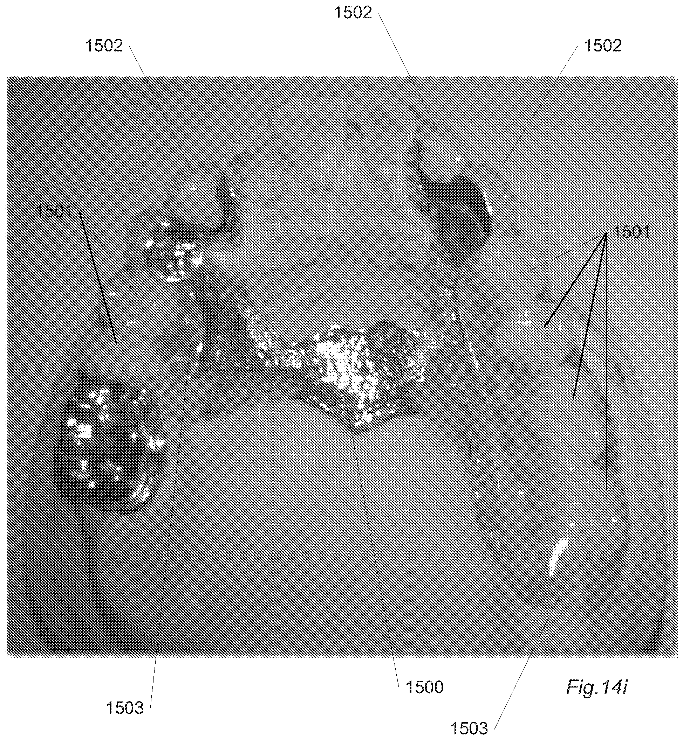

Virtual representations of artificial teeth 1501, porcelain copings or veneer 1502 and artificial gingiva 1503 is furthermore added to the framework before the virtual design file containing all the parts described herein is sent to a CAM application for manufacturing. The different parts are then produced for example by different 3D printing and milling equipment depending on the desired material, shape, tolerance requirement etc. and are subsequently assembled into the final product as shown in figure 14i.

Thus, as discussed, by using the desired shape of the crowns as a starting point in the workflow as described it is possible to provide a partial removable denture having better properties than known hitherto.

In another embodiment the workflow may be even further altered in that the dental technician may start out designing the entire partial denture as one piece. In this process the technician will typically start out with the full anatomy of the mouth.

When the initial one piece design of the partial removable denture is in place the technician may divide the partial removable denture into its different parts, e.g. crowns, artificial teeth, framework and/or artificial gingiva. The technician may do this manually in the CAD software or the CAD software may suggest a division which then can be chosen or further modified.

Typically the technician will split the partial removable into a first portion and a second portion. The first portion forms the primary part of the telescopic double crowns, which the dentist will attach to the respective prepared teeth.

The second portion will be the removable denture itself. This will be formed of a framework layer that comprises the framework part of the secondary part of the telescopic crown which is attached to the rest of the framework. An additional layer is then typically arranged on the framework which for example may comprise the veneer on the framework part of the telescopic crown or artificial teeth.

When the partial denture has been split into its appropriate part the separate part may then be designed in detail. Thus, for example with respect to any telescopic crowns that need to be designed, the first and second sub-steps 1305a and 1305b described above with respect to figure 13b can be followed.

In another aspect of the invention an intermediate manufacturing and scanning step is performed where the primary part is produced and scanned. This is due to the fact that some CAD/CAM setups do not produce the parts with sufficiently high tolerance. Thus, in particular with respect to the fit between the primary and the second part of a telescopic crown the resulting fit may become inferior. By performing an intermediate scanning step on the produced primary part it is ensured that the telescopic fit maintains it desired quality.

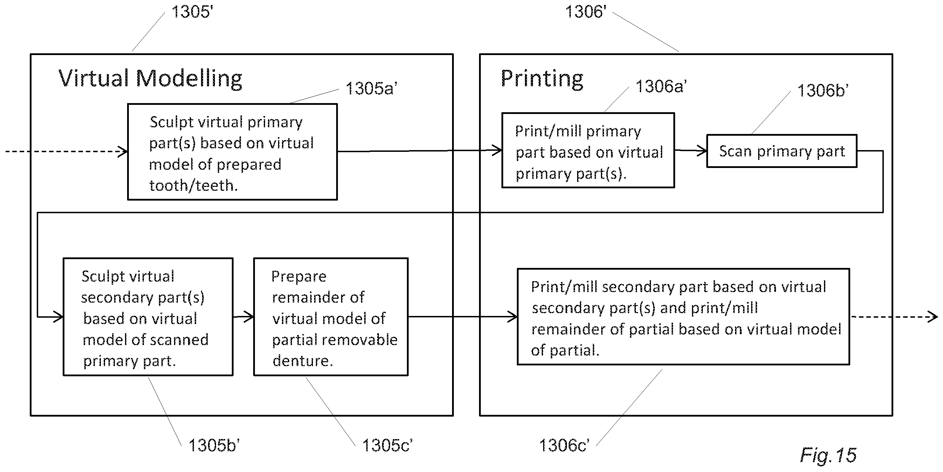

The flow of such an intermediate manufacturing and scanning step is shown in figure 15, where the virtual modelling step 1305' and the printing step 1306' have been shown in further detail.

In the initial virtual modelling step 1305a' the primary part of the telescopic double crown is modelled. This can be done as the initial step or the primary part can be modelled based on the desired anatomy of the secondary part.

When the primary part is modelled it is sent to printing, milling or other CAM in the printing step 1306'. The primary part is then produced, e.g. by printing or milling, in step 1306a'. The primary part is then scanned in step 1306b'.

The scan of the primary part is subsequently used as a reference in step 1305b' to virtually design the secondary part of the telescopic double crown. The anatomy of the secondary part may already have been determined in step 1305' as discussed or may be determined in this step. Of course if more than one telescopic crown is produced they will usually be produced simultaneously.

When the telescopic crown(s) have been designed the remainder of the partial removable denture is designed in step 1305c'. As discussed herein this step may advantageously be performed at the beginning of the virtual modelling. Thus, the complete design including the anatomy of the removable denture may advantageously be determined first, and subsequently the specific parts of the partial removable denture may be determined.

When the crowns and the denture are completely designed the secondary part and the rest of the denture are manufactured in step 1306c'.

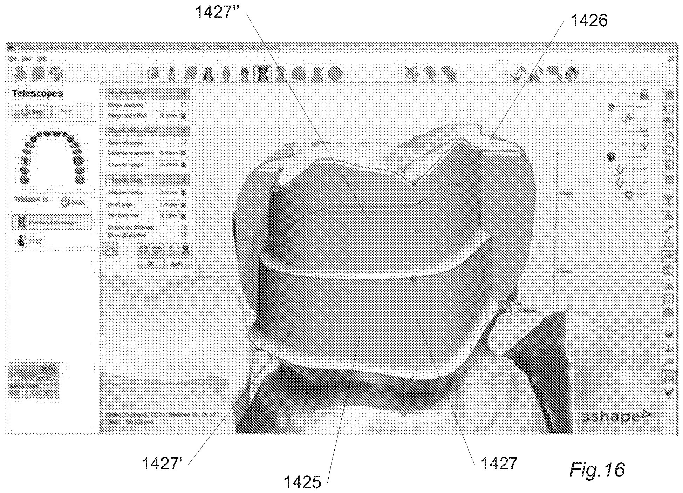

In yet another embodiment the telescopic molar crown can be formed as a partial telescopic crown. As shown in figure 16 this is done by the primary part 1425 in part with an anatomic surface 1426 and part with a telescopic surface 1427. In the current example the telescopic surface has two telescopic bands 1427' and 1427".

As mentioned previously several types of telescopic crowns as shown in figures 17a, 17b and 17c may easily be designed using the above process.

A traditional telescopic double crown 1600 is shown in figure 17a. A primary part 1602 is attached to a prepared tooth 1601. The external surface 1603 of the primary part has a tapering planar surface 1604.

A secondary part 1605 is formed of a framework part 1606 and an outer veneer 1607. The framework part 1606 has an internal surface 1608 comprising a tapering planar surface 1609 that follows the shape and form of the tapering planar surface of the primary part very closely.

This fit between the two planar surfaces 1604 and 1609 establishes a coupling effect, which is furthermore enhanced by the moisture and liquid within the oral cavity, and thus couples the primary part and the secondary part together. The coupling is however not permanent, and by applying a required pulling force the primary part and the secondary part may be decoupled. The force required to separate the two parts are determined by a variety of factors, for example the size of the planar surfaces, the angle of the taper and how precise the planar surfaces match each other.

Figure 17b shows another embodiment of a telescopic double crown where the framework part 1616 is covered partly by the veneer 1617. However, the framework part and the veneer part still form the secondary part and functions as described with respect to figure 17a.

An embodiment of an attachment crown 1620 is shown in figure 17c. In this embodiment the primary part is formed of an inner part 1622 whereon a veneer layer 1627 is applied on the labial or buccal surface of the inner part 1622. The primary part is attached to the prepared tooth 1621. The secondary part 1625 is formed of the framework part 1626. When the secondary part 1625 is placed on the primary part, the internal planar surface 1628 of the secondary part couples with the external surface 1624 of the primary part in a similar manner as described above with respect to figures 17a and 17b.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

The features of the method described above and in the following may be implemented in software and carried out on a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

## Claims

1. A method for designing at least one telescopic double crown for a patient comprising an internal crown and an external crown, where the internal crown is defined as a primary part and the external crown is defined as a secondary removable part, wherein the method comprises the steps of:
- providing a 3D scan of the patient's teeth;
- virtually designing the primary part using a computer;
- virtually designing the secondary part using a computer; and
- automatically generating the external surface of the primary part and the internal surface of the secondary part to have matching shapes using a data processing system,
where at least a region of the external surface of the primary part and the corresponding region of the internal surface of the secondary part are substantially straight having the same well-defined angle
**characterised in that** the method further comprises the steps of:
- producing the primary part
- providing a 3D scan of the external surface of the produced primary part,
- using the external surface of the produced primary part to generate matching shapes of the external surface of the primary part and the internal surface of the secondary part.

2. The method according to any of the preceding claims, wherein at least half of the area of the external surface of the primary part and the internal surface of the secondary part are substantially straight having the same well-defined angle.

3. The method according to any of the preceding claims, wherein the entire external surface of the primary part and the entire internal surface of the secondary part are substantially straight having the same well-defined angle.

4. The method according to any of the preceding claims, wherein the secondary part is designed first and based on this the primary part is designed.

5. The method according to any of the preceding claims, wherein at least a part of the outer surface of the secondary part is designed first and used as a confinement shell within which the primary part is designed.

6. The method according to any of the preceding claims, wherein the primary part is designed first and based on this the secondary part is designed.

7. The method according to any of the preceding claims, wherein the method further comprises designing a framework part for a partial removable denture.

8. The method according to any of the preceding claims, wherein the secondary part and the framework part are designed as one part.

9. The method according to any of the preceding claims, wherein the method further comprises designing the sides of the primary part to be straight and vertical to obtain a suitable insertion direction.

10. The method according to any of the preceding claims, wherein the method further comprises designing at least two double crowns and wherein the insertion directions of each of the primary parts or of each of the secondary parts to be the same.

11. The method according to any of the preceding claims, wherein the method further comprises designing at least two double crowns and wherein the telescope directions of each of the primary parts or of each of the secondary parts to be the same.

## Patentansprüche

1. Verfahren zum Entwurf zumindest einer Teleskopdoppelkrone für einen Patienten, die eine innere Krone und eine äußere Krone umfasst, wobei die innere Krone als ein Primärteil definiert ist und die äußere Krone als ein entfernbarer Sekundärteil definiert ist, wobei das Verfahren die Schritte umfasst von:
- Bereitstellen eines 3D-Scans der Zähne des Patienten;
- virtuell Entwerfen des Primärteils unter Verwendung eines Computers;
- virtuell Entwerfen des Sekundärteils unter Verwendung eines Computers; und
- automatisch Erzeugen der äußeren Oberfläche des Primärteils und der inneren Oberfläche des Sekundärteils, um passende Formen zu haben, unter Verwendung eines Datenverarbeitungssystems,
wobei zumindest ein Bereich der äußeren Oberfläche des Primärteils und der entsprechende Bereich der inneren Oberfläche des Sekundärteils im Wesentlichen gerade mit dem gleichen wohldefinierten Winkel sind
**dadurch gekennzeichnet, dass** das Verfahren weiter umfasst die Schritte von:
- Herstellen des Primärteils
- Bereitstellen eines 3D-Scans der äußeren Oberfläche des hergestellten Primärteils,
- Verwenden der äußeren Oberfläche des hergestellten Primärteils zum Erzeugen passender Formen der äußeren Oberfläche des Primärteils und der inneren Oberfläche des Sekundärteils.

2. Verfahren nach einem der vorstehenden Ansprüche, wobei zumindest die Hälfte des Bereiches der äußeren Oberfläche des Primärteils und der inneren Oberfläche des Sekundärteils im Wesentlichen gerade mit dem gleichen wohldefinierten Winkel sind.

3. Verfahren nach einem der vorstehenden Ansprüche, wobei die gesamte äußere Oberfläche des Primärteils und die gesamte innere Oberfläche des Sekundärteils im Wesentlichen gerade mit dem gleichen wohldefinierten Winkel sind.

4. Verfahren nach einem der vorstehenden Ansprüche, wobei der Sekundärteil zuerst entworfen wird und darauf basierend der Primärteil entworfen wird.

5. Verfahren nach einem der vorstehenden Ansprüche, wobei zumindest ein Teil der äußeren Oberfläche des Sekundärteils zuerst entworfen und als eine Begrenzungsschale verwendet wird, innerhalb der der Primärteil entworfen wird.

6. Verfahren nach einem der vorstehenden Ansprüche, wobei der Primärteil zuerst entworfen wird und darauf basierend der Sekundärteil entworfen wird.

7. Verfahren nach einem der vorstehenden Ansprüche, wobei das Verfahren weiter umfasst Entwerfen eines Gerüstteils für einen teilweise entfernbaren Zahnersatz.

8. Verfahren nach einem der vorstehenden Ansprüche, wobei der Sekundärteil und der Gerüstteil als ein Teil entworfen werden.

9. Verfahren nach einem der vorstehenden Ansprüche, wobei das Verfahren weiter umfasst Entwerfen der Seiten des Primärteils so, dass sie gerade und vertikal sind, um eine geeignete Einführungsrichtung zu erhalten.

10. Verfahren nach einem der vorstehenden Ansprüche, wobei das Verfahren weiter Entwerfen von zumindest zwei Doppelkronen umfasst und wobei die Einführungsrichtungen jedes der Primärteile oder jedes der Sekundärteile gleich sind.

11. Verfahren nach einem der vorstehenden Ansprüche, wobei das Verfahren weiter Entwerfen von zumindest zwei Doppelkronen umfasst und wobei die Teleskoprichtungen jedes der Primärteile oder jedes der Sekundärteile gleich sind.

## Revendications

1. Procédé de conception d'au moins une couronne double télescopique pour un patient comprenant une couronne interne et une couronne externe, où la couronne interne est définie en tant que partie primaire et la couronne externe est définie en tant que partie secondaire amovible, dans lequel le procédé comprend les étapes de :
- fourniture d'un scan 3D des dents du patient ;
- conception virtuelle de la partie primaire en utilisant un ordinateur ;
- conception virtuelle de la partie secondaire en utilisant un ordinateur ; et
- génération automatique de la surface externe de la partie primaire et de la surface interne de la partie secondaire pour avoir des formes appariées en utilisant un système de traitement de données,
où au moins une région de la surface externe de la partie primaire et la région correspondante de la surface interne de la partie secondaire sont sensiblement droites ayant le même angle bien défini
**caractérisé en ce que** le procédé comprend en outre les étapes de :
- production de la partie primaire
- fourniture d'un scan 3D de la surface externe de la partie primaire produite,
- utilisation de la surface externe de la partie primaire produite pour générer des formes appariées de la surface externe de la partie primaire et de la surface interne de la partie secondaire.

2. Procédé selon l'une quelconque des revendications précédentes, dans lequel au moins la moitié de la zone de la surface externe de la partie primaire et de la surface interne de la partie secondaire sont sensiblement droites ayant le même angle bien défini.

3. Procédé selon l'une quelconque des revendications précédentes, dans lequel toute la surface externe de la partie primaire et toute la surface interne de la partie secondaire sont sensiblement droites ayant le même angle bien défini.

4. Procédé selon l'une quelconque des revendications précédentes, dans lequel la partie secondaire est conçue en premier et, sur la base de cela, la partie primaire est conçue.

5. Procédé selon l'une quelconque des revendications précédentes, dans lequel au moins une partie de la surface externe de la partie secondaire est conçue en premier et utilisée en tant que coque de confinement à l'intérieur de laquelle la partie primaire est conçue.

6. Procédé selon l'une quelconque des revendications précédentes, dans lequel la partie primaire est conçue en premier et, sur la base de cela, la partie secondaire est conçue.

7. Procédé selon l'une quelconque des revendications précédentes, dans lequel le procédé comprend en outre la conception d'une partie de structure pour une prothèse dentaire amovible partielle.

8. Procédé selon l'une quelconque des revendications précédentes, dans lequel la partie secondaire et la partie de structure sont conçues en une seule pièce.

9. Procédé selon l'une quelconque des revendications précédentes, dans lequel le procédé comprend en outre la conception des côtés de la partie primaire pour être droits et verticaux pour obtenir une direction d'insertion adaptée.

10. Procédé selon l'une quelconque des revendications précédentes, dans lequel le procédé comprend en outre la conception d'au moins deux couronnes doubles et dans lequel les directions d'insertion de chacune des parties primaires ou de chacune des parties secondaires sont les mêmes.

11. Procédé selon l'une quelconque des revendications précédentes, dans lequel le procédé comprend en outre la conception d'au moins deux couronnes doubles et dans lequel les directions de télescope de chacune des parties primaires ou de chacune des parties secondaires sont les mêmes.
